# EUROPÄISCHE PATENTSCHRIFT

(11) **EP 2 039 978 B1**
(45) Veröffentlichungstag und Bekanntmachung des Hinweises auf die Patenterteilung: **22.01.2020**
(21) Anmeldenummer: 08450132.9
(22) Anmeldetag: 10.09.2008
(51) Int. Cl.: F16N 25/00, F16N 7/30

(54) **Vorrichtung zum Aufteilen von mit Hilfe eines Gasstromes geförderter Schmierflüssigkeit**
Device for sharing out lubricating fluid transported with the help of a gas flow
Dispositif de répartition d'un liquide lubrifiant transporté à l'aide d'un flux de gaz

(30) Priorität: 18.09.2007 AT 14522007
(43) Veröffentlichungstag der Anmeldung: 25.03.2009
(73) Patentinhaber: ss.LUBAC Schmiertechnische Anlagen & Produkte Ges.m.b.H., 4820 Bad Ischl (AT)
(72) Erfinder: Schulz, Thomas, 4820 Bad Ischl (AT)
(74) Vertreter: Hübscher & Partner Patentanwälte GmbH

(56) Entgegenhaltungen:
- EP-A2- 1 588 798
- DE-A1- 4 107 216
- JP-A- 62 106 196
- JP-A- 2001 032 995
- JP-A- 2002 130 587
- US-A- 5 007 504
- US-A- 5 253 733

## Beschreibung

Die Erfindung bezieht sich auf eine Vorrichtung zum Aufteilen von mit Hilfe eines Gasstromes geförderter Schmierflüssigkeit mit einem einerseits an eine Druckgasleitung und anderseits an eine Versorgungsleitung für Schmierflüssigkeit angeschlossenen Verteiler, der über seine Länge verteilte, an je eine Förderleitung angeschlossene Austrittöffnungen für die Schmierflüssigkeit aufweist.

Um kleine Mengen an Schmierflüssigkeit lageunabhängig zu mehreren Schmierstellen fördern zu können, ist es bekannt (DE 10 2005 031 770 A1), die Schmierflüssigkeit mit Hilfe von Druckluft zu fördern, wobei sich die Schmierflüssigkeit aufgrund der axial zur Förderleitung verlaufenden, turbulenten Gasströmung als dünner Film an den Leitungswänden absetzt und entlang der Förderleitung gleichmäßig zu den den einzelnen Schmierstellen zugeordneten Austrittsöffnungen gefördert wird. Nachteilig ist allerdings, dass die Aufteilung der Schmierflüssigkeitsmenge auf die einzelnen Austrittsöffnungen für viele Anwendungsfälle nicht ausreichend genau ist. Um eine genauere Mengenaufteilung der Schmierflüssigkeit auf vorgegebene Schmierstellen sicherzustellen, wurde bereits vorgeschlagen (DE 10 2005 010 132 A1), einen Verteiler mit über seine Länge verteilten Austrittsöffnungen vorzusehen, die jeweils mit einer gesonderten axialen Bohrung verbunden sind, sodass sich für jede Austrittsöffnung eine eigene Förderleitung ergibt, über die der Schmierflüssigkeitsfilm mittels des Fördergases den Austrittsöffnungen zugeführt wird. Die Aufteilung des Schmierflüssigkeit- und Gasstromes erfolgt über vergleichsweise aufwändige Mengenteiler, die beispielsweise eine mit einer Prallfläche für die Gasströmung versehene Verteilerkammer aufweisen, von der entsprechende Ableitkanäle für je einen Teilstrom des Gas-Schmierflüssigkeitsgemisches abzweigen (WO 2005/113157 A1). Die Aufteilung des Gas-Schmierflüssigkeitsgemisches auf die einzelnen Förderleitungen des Verteilers wird durch solche Mengenteiler zwar genauer, doch können damit noch immer keine höheren Anforderungen an die Schmierflüssigkeitsaufteilung erfüllt werden.

Darüber hinaus beschreibt die JP 62-106196 A eine Vorrichtung zum Aufteilen von mit Hilfe eines Gasstroms geförderter Schmierflüssigkeit mit einem einerseits an eine Druckgasleitung und anderseits an eine Versorgungsleitung für Schmierflüssigkeit angeschlossenen Verteiler. Jede Schmierstelle wird über eine eigene Versorgungsleitung, der eine Pumpe und eine Dosiereinrichtung zugeordnet ist, mit Schmiermittel in Form eines Schmierölgranulats versorgt, um die den einzelnen Schmierstellen zugeförderte Schmierölmenge über einen Sensor bestimmen und im Bedarfsfall steuern zu können.

Der Erfindung liegt somit die Aufgabe zugrunde, eine Vorrichtung zum Aufteilen von mit Hilfe eines Gasstromes geförderter Schmierflüssigkeit der eingangs geschilderten Art so auszugestalten, dass trotz einer geringen Gesamtmenge an Schmierflüssigkeit mit vergleichsweise einfachen Mitteln eine genaue Mengenaufteilung der Schmierflüssigkeit auf mehrere Schmierstellen sichergestellt werden kann.

Ausgehend von einer Vorrichtung der eingangs geschilderten Art löst die Erfindung die gestellte Aufgabe dadurch, dass der Verteiler aus einem die Austrittsöffnungen bildenden Hüllrohr und innerhalb des Hüllrohres verlaufenden, an die Austrittsöffnungen angeschlossenen Rohren für die einzelnen Förderleitungen zusammengesetzt ist und dass die an die Druckgasleitung angeschlossenen Förderleitungen je für sich über eine Dosiereinrichtung mit der gemeinsamen Versorgungsleitung für Schmierflüssigkeit in Verbindung stehen.

Da zufolge dieser Maßnahme jeder Förderleitung die Schmierflüssigkeitsmenge, die zur Versorgung der an diese Förderleitung angeschlossenen Schmierstelle erforderlich ist, gesondert über eine Dosiereinrichtung aufgegeben wird, kann die Aufteilung der über eine gemeinsame Versorgungsleitung bereitgestellten Schmierflüssigkeit auf die einzelnen Förderleitungen des Verteilers sehr genau gesteuert werden, ohne die vorteilhafte Förderung der Schmierflüssigkeit in den einzelnen Förderleitungen in Form eines dünnen, entlang der Innenwandung strömenden Schmierflüssigkeitsfilms zu gefährden. Die einzelnen Förderleitungen werden ja je für sich mit Druckgas beaufschlagt, wobei innerhalb der Förderleitungen ein ausreichender Förderweg für eine entsprechende Ausbildung eines Schmierflüssigkeitsfilms zur Verfügung steht. Über die Dosiereinrichtungen, beispielsweise Dosierventile, kann auch die Versorgung der einzelnen Schmierstellen mit Schmierflüssigkeit in einfacher Weise überwacht werden. Da der Verteiler aus einem die Austrittsöffnungen bildenden Hüllrohr und innerhalb des Hüllrohres verlaufenden, an die Austrittsöffnungen angeschlossenen Rohren für die einzelnen Förderleitungen zusammengesetzt ist, ergeben sich einfache Konstruktionsverhältnisse, weil die Rohre innerhalb des Hüllrohres ohne die sonst erforderliche Bearbeitung des Verteilerkörpers durch die Förderleitungen bildende Bohrungen entfallen und die Leitungsführung innerhalb des Querschnittes des Hüllrohres frei gewählt werden kann, wobei die Lage der Austrittsöffnungen den jeweiligen Anforderungen entsprechend vorgegeben werden kann.

Damit eine Strömungsverbindung zwischen den einzelnen Beaufschlagungsleitungen für die Schmierflüssigkeit über den Umweg der von der gemeinsamen Druckgasleitung abgezweigten Anschlussleitungen und damit eine fehlerhafte Förderung der Schmierflüssigkeit ausgeschlossen werden kann, können in diesen einzelnen Anschlussleitungen Rückschlagventile vorgesehen werden, die in Strömungsrichtung vor der Einmündung der Beaufschlagungsleitungen für die Schmierflüssigkeit in die Anschlussleitungen liegen.

Aufgrund der möglichen Anpassung der Lage der Austrittsöffnungen ist es auch ohne weiteres möglich, die Austrittsöffnungen entlang einer achsparallelen Geraden des Hüllrohres vorzusehen, was für manche Einsätze von Vorteil ist, beispielsweise für die Lagerung der Walzen eines Walzgerüstes in den Walzeneinbaustücken.

In der Zeichnung ist der Erfindungsgegenstand in einem Ausführungsbeispiel dargestellt. Es zeigen
- Fig. 1: eine erfindungsgemäße Vorrichtung zum Aufteilen von mit Hilfe eines Gasstromes geförderter Schmierflüssigkeit in einer blockschaltbildartigen Darstellung und
- Fig. 2: einen Schnitt nach der Linie II-II der Fig. 1 in einem größeren Maßstab.

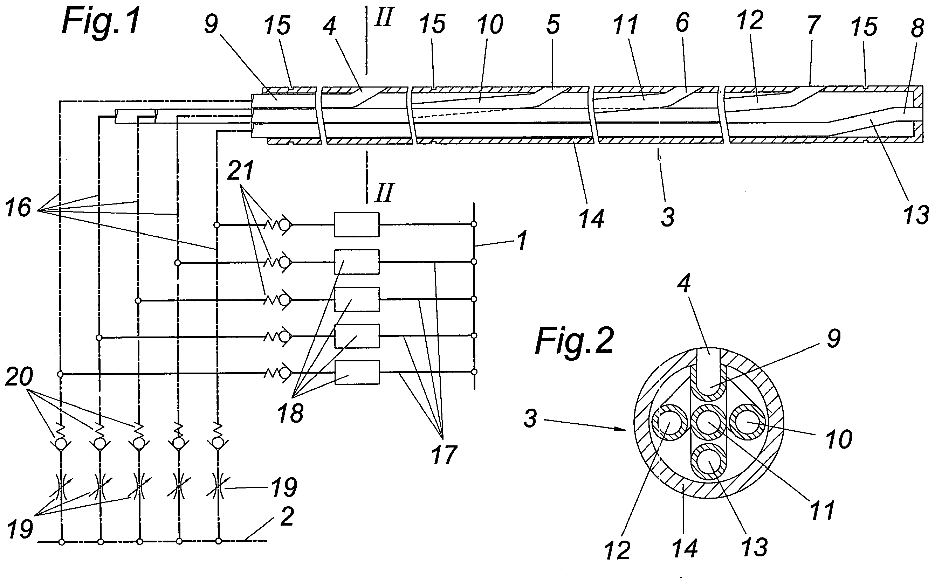

Die dargestellte Vorrichtung weist einen einerseits an eine Versorgungsleitung 1 für Schmierflüssigkeit, insbesondere Schmieröl, und anderseits an eine Druckgasleitung 2 angeschlossenen Verteiler 3 auf, der über seine Länge verteilte Austrittsöffnungen 4, 5, 6, 7 und 8 für die Schmierflüssigkeit aufweist. Diesen Austrittsöffnungen 4 bis 8 sind gesonderte Förderleitungen 9, 10, 11, 12 und 13 zugeordnet. Der Verteiler 3 ist aus einem die Austrittsöffnungen 4 bis 8 bildenden Hüllrohr 14 und innerhalb dieses Hüllrohres 14 verlegten Rohren für die einzelnen Förderleitungen 9 bis 13 aufgebaut, wie dies den Fig. 1 und 2 entnommen werden kann. Um die einzelnen Austrittsöffnungen 4 bis 8 voneinander hydraulisch zu trennen, weist das Hüllrohr 14 Ringnuten 15 zwischen den einzelnen Austrittsöffnungen 4 bis 8 auf, so dass in diese Ringnuten 15 Dichtungsringe eingesetzt werden können, die ein Überfließen der Schmierflüssigkeit aus dem Bereich einer Austrittsöffnung in den Bereich einer benachbarten Austrittsöffnung verhindern.

Zum Unterschied von bekannten Verteilervorrichtungen dieser Art wird zur Beschickung der einzelnen Förderleitungen 9 bis 13 nicht ein Gas-Schmierflüssigkeitsgemisch über einen Mengenteiler auf die einzelnen Förderleitungen 9 bis 13 aufgeteilt, sondern in die von der Druckgasleitung 2 abgezweigten Anschlussleitungen 16 je die erforderliche Schmierflüssigkeitsmenge zudosiert. Zu diesem Zweck sind die Anschlussleitungen 16 mit Beaufschlagungsleitungen 17 verbunden, die an die gemeinsame Versorgungsleitung 1 für Schmierflüssigkeit angeschlossen sind und je eine Dosiereinrichtung 18, beispielsweise ein Dosierventil, enthalten. Aufgrund dieser Maßnahmen wird jeder der Förderleitungen 9 bis 13 eine genau vorgebbare Menge an Schmierflüssigkeit mittels eines Gasstromes zugefördert, der mit Hilfe von in den Anschlussleitungen 16 vorgesehenen, steuerbaren Drosseln 19 an die jeweils zu fördernde Schmierflüssigkeitsmenge angepasst werden kann. Das den Förderleitungen 9 bis 13 zugeförderte Gas-Schmierflüssigkeitsgemisch bedingt die Ausbildung eines dünnen Schmierflüssigkeitsfilms auf der Innenwandung der Förderleitungen 9 bis 13, sodass dieser Schmierflüssigkeitsfilm mit Hilfe der turbulenten Gasströmung entlang der Förderleitungen 9 bis 13 zu den Austrittsöffnungen 4 bis 8 gefördert wird und durch diese Austrittsöffnungen 4 bis 8 in einer genau dosierten Menge zu den Schmierstellen gelangt.

Um eine Strömungsverbindung zwischen den einzelnen Beaufschlagungsleitungen 17 über den Umweg der an die Druckgasleitung angeschlossenen Anschlussleitungen 16 und damit unter Umständen eine fehlerhaft Aufteilung der Schmierflüssigkeit auf die einzelnen Förderleitungen 9 bis 13 zu unterbinden, können in den einzelnen Anschlussleitungen 16 vorteilhaft Rückschlagventile 20 vorgesehen werden, die in Strömungsrichtung vor der Einmündung der Beaufschlagungsleitungen 17 in die Anschlussleitungen 16 liegen. Mit Hilfe von Rückschlagventilen 21 kann außerdem ein Rückfluss von Schmierflüssigkeit zu den Dosiereinrichtungen 18 vermieden werden. Damit ist unter allen Betriebsumständen eine genaue Aufteilung der Schmierflüssigkeit auf die einzelnen Schmierstellen möglich.

## Patentansprüche

1. Vorrichtung zum Aufteilen von mit Hilfe eines Gasstromes geförderter Schmierflüssigkeit mit einem einerseits an eine Druckgasleitung (2) und anderseits an eine Versorgungsleitung (1) für Schmierflüssigkeit angeschlossenen Verteiler (3), der über seine Länge verteilte, an je eine Förderleitung (9-13) angeschlossene Austrittöffnungen (4-8) für die Schmierflüssigkeit aufweist, **dadurch gekennzeichnet, dass** der Verteiler (3) aus einem die Austrittsöffnungen (4-8) bildenden Hüllrohr (3) und innerhalb des Hüllrohres (3) verlaufenden, an die Austrittsöffnungen (4-8) angeschlossenen Rohren für die einzelnen Förderleitungen (9-13) zusammengesetzt ist und dass die an die Druckgasleitung (2) angeschlossenen Förderleitungen (9-13) je für sich über eine Dosiereinrichtung (18) mit der gemeinsamen Versorgungsleitung (1) für die Schmierflüssigkeit in Verbindung stehen.

2. Vorrichtung nach Anspruch 1, **dadurch gekennzeichnet, dass** in den einzelnen von der gemeinsamen Druckgasleitung (2) abgezweigten, mit den Förderleitungen (9-13) verbundenen Anschlussleitungen (16) Rückschlagventile (20) vorgesehen sind, die in Strömungsrichtung vor den Einmündungen von mit den Dosiereinrichtungen (18) versehenen Beaufschlagungsleitungen (17) für die Schmierflüssigkeit liegen.

3. Vorrichtung nach Anspruch 1 oder 2, **dadurch gekennzeichnet, dass** die Austrittsöffnungen (4-8) entlang einer achsparallelen Geraden des Hüllrohres (3) vorgesehen sind.

## Claims

1. Apparatus for distributing lubricating liquid conveyed with the aid of a gas flow, having a distributor (3) which is connected on the one hand to a compressed gas line (2) and on the other hand to a supply line (1) for lubricating liquid and comprises exit openings (4-8) for the lubricating liquid distributed over its length and each connected to a conveying line (9-13), **characterised in that** the distributor (3) is composed of a jacket tube (3) forming the exit openings (4-8) and of tubes for the individual conveying lines (9-13), which tubes extend within the jacket tube (3) and are connected to the exit openings (4-8), and **in that** the conveying lines (9-13) connected to the compressed gas line (2) are each connected to the common supply line (1) for the lubricating liquid via a metering device (18).

2. Apparatus as claimed in claim 1, **characterised in that** non-return valves (20) are provided in the individual connecting lines (16) which branch off from the common compressed gas line (2) and are connected to the conveying lines (9-13), which non-return valves are located, in the flow direction, upstream of the junction with admission lines (17) for the lubricating liquid provided with the metering devices (18).

3. Apparatus as claimed in claim 1 or 2, **characterised in that** the exit openings (4-8) are provided along an axis-parallel straight line of the jacket tube (3).

## Revendications

1. Dispositif de distribution d'un liquide lubrifiant transporté à l'aide d'un flux de gaz, comportant un distributeur (3) raccordé d'un côté à une conduite de gaz comprimé (2) et de l'autre côté à une conduite d'alimentation en liquide lubrifiant (1), qui présente sur sa longueur des orifices de sortie de lubrifiant (4-8) raccordés chacun à une conduite de transport (9-13), **caractérisé en ce que** le distributeur (3) est constitué d'un tube enveloppe (3) formant les orifices de sortie (4-8) et de tuyaux courant à l'intérieur du tube enveloppe (3) raccordés aux orifices de sortie (4-8) pour les différentes conduites de transport (9-13) et que les conduites de transport (9-13) raccordées à la conduite de gaz comprimé (2) sont chacune reliées par un dispositif de dosage (18) à la conduite d'alimentation commune en liquide lubrifiant (1).

2. Dispositif selon la revendication 1, **caractérisé en ce que** dans les différentes conduites de raccordement (16) dérivées de la conduite de gaz comprimé commune (2) et reliées aux conduites de transport (9-13) sont prévus des clapets anti-retour (20) qui se trouvent, dans le sens de l'écoulement, en amont des embouchures des conduites de distribution de liquide lubrifiant (17) munies des dispositifs de dosage (18).

3. Dispositif selon la revendication 1 ou 2, **caractérisé en ce que** les orifices de sortie (4-8) sont prévus le long d'une droite parallèle à l'axe du tube enveloppe (3).
